# EUROPEAN PATENT SPECIFICATION

(11) **EP 0 835 052 B1**
(45) Date of publication and mention of the grant of the patent: **20.09.2000**
(21) Application number: 96920993.1
(22) Date of filing: 27.06.1996
(51) Int. Cl.: A01C 9/00, A01C 11/00, A01C 7/04

(54) **PLANTERS**
PFLANZMASCHINE
PLANTEUSES

(30) Priority: 30.06.1995 GB 9513382
(43) Date of publication of application: 15.04.1998
(73) Proprietor: Cosar Ltd., Edinburgh EH9 3JG (GB)
(72) Inventor: ROSS, David William, Edinburgh EH10 7DZ (GB); McRAE, Douglas Charles, Penicuik, Midlothian EH26 9EG (GB)
(74) Representative: McNally, Roisin
(86) International application number: GB9601546
(87) International publication number: WO9701950

(56) References cited:
- DE-C- 246 586
- FR-A- 2 390 772
- US-A- 2 674 962
- US-A- 2 995 274
- US-A- 4 023 511

## Description

The present invention relates to planters.

The process of planting seed-pieces (*i.e.* tubers and seeds) for a variety of different vegetable crops is enhanced if the seed-pieces are spaced at uniform and consistent intervals, as determined by the operator of a particular planting machine. Controllable and accurate placement of a seed-piece is a factor in producing the required yield grade size and distribution. The problem is that existing planting methods dispense seed-pieces at a forward rate relative to the forward speed of the planter and this forward velocity of the seed-piece as it makes contact with the soil bed affects the precision of the placement, forward-roll being a common problem.

US-A-4023511 discloses a planter which dibs seed, that is to say inserts the seed into the soil, and which comprises a number of seed-piece retention means adapted to be driven around a horizontal axis with a common rotational speed and each displaceable toward and away from the said axis.

An object of the present invention is to provide a planter which will not only allow the seed-pieces to be delivered at zero or near-zero ground speed with respect to the forward direction of the planter but which will be capable of achieving this result over a variety of spacing intervals.

According to the present invention, a planter comprises a number of seed-piece retention means adapted for dropping seed-pieces onto the ground or into a pre-formed furrow, and adapted to be driven around a common horizontal rotation axis with a common rotational speed and each displaceable towards and away from said axis to provide a corresponding variation in its peripheral velocity.

Conveniently, the common rotational speed of the retention means is in the same sense as any ground wheels present.

Conveniently, the planter includes speed adjustment means effective to set said common rotational speed to a value at which there will be zero or near zero relative speed between the retention means and the ground at the point of seed-piece ejection from the planter (*i.e.* "zero ground speed").

Conveniently, the planter includes control means operative to control the distance of the retention means from the rotation axis in dependence on the angular position of the retention means about said axis.

Conveniently, the control means is operative to ensure that said distance is at a minimum or other low value while the retention means is moving past a source of the seed-pieces to be planted, thereby to facilitate pick-up of the seed-pieces from the source by the retention means.

Conveniently, the retention means are mounted on the free-ends of variable-length arms.

Conveniently, the control means comprises an arm-mounted spigot or like projection which is engaged by a cam-rail or like guide element to restrain motion of the projection towards or away from the rotation axis as the case may be.

Conveniently, the retention means comprise suction cups or the like.

Conveniently, pneumatic means are provided to agitate and/or partially float seed-pieces in a seed-piece container so as to facilitate their pick-up by the retention means.

Conveniently, changes in distance of the seed-retention means from the rotation axis are effected by pneumatically-operated actuators.

Conveniently, each arm comprises a telescopic central section mounted between internal and external bellows to define inner and outer annular bellows chambers and a central chamber, the central chamber being pneumatically isolated from the other two chambers so that the application of suction or pressure at the suction cups is independent of the pneumatic extension and retraction of the arms.

Conveniently, the planter includes switching means to activate and/or de-activate selected ones of the retention means.

Conveniently, there are twelve arms in the planter and the switching means is operative so that all or only a specified evenly spaced fraction of this number of retention means are activated.

Conveniently, the switching means is provided by a porting assembly comprising a stator assembly and a rotor hub assembly.

Conveniently, the stator and rotor hub assemblies comprise a circumferentially-apertured first cylindrical assembly, and a circumferentially-apertured second cylindrical assembly at least in part embracing, or embraced by, the first cylindrical assembly, whereby, in operation of the planter, extension or retraction of the arms is effected as the apertures of matching pairs of apertures of the two assemblies are brought into or out of alignment with one another variously to connect with or shut out a vacuum source and/or a pressure source from the relevant retention means.

Conveniently, the porting assembly includes an apertured indexer assembly adapted to set the number of vacuum cups that will be operational in a given situation, the indexer assembly being sandwiched between the stator assembly and the rotor assembly and being movable relative to both the assemblies into a chosen one of a number of pre-determined positions thereby to block off none or some of the matching aperture pairs and prevent connection of the relevant retention means with the vacuum/pressure source.

Conveniently, the planter includes a variable speed drive motor and a ground speed measurement means operative automatically to reset the planter to give the desired seed-piece spacing requirement substantially independently of the ground speed of the planter.

In one design of machine in accordance with the present invention, the machine consists of a delivery hopper mounted over a rotor including a series of suction cups attached to the ends of radial arms. The arms pivot around a horizontal axis, and are at constant angular displacement to each other. The total assembly in this case is of a generally star-like configuration with each arm extensible and the extension is appropriately controlled e.g. by some follower means such as an arm-mounted spigot engaging a cam rail which can move the spigot towards or away from the axis of rotation.

Clearly, the action of moving the radial arms to a different extension point will change the peripheral velocity of the suction cup and the seed-piece held within the cup, independently of any particular rotation speed. Therefore by moving the cup in the way described, the peripheral velocity of the seed-piece can be made equal to the forward speed of the planting machine and, with the rotor rotating in a sense such that at the ejection point from the machine the seed-piece will be moving in the opposite direction to the machine's forward direction, the seed piece will be instantaneously at zero-ground speed, the desired effect.

The ability to change spacing intervals is a complementary part of this design of machine. Thus if the spacing interval is modified by changing the rotational speed of the rotor to give the desired spacing, the arm extension can be changed in conjunction to maintain the desired "zero ground speed" condition discussed above. As the peripheral velocity of the cups is proportional to their rotational velocity, but inversely proportional to the arm extension, it follows that for a particular proportional change in the rotational speed of the rotor, exactly the same proportional change will be required in the length of the radial arms to maintain the zero ground-speed condition.

An embodiment of the invention will now be described, by way of example only, with reference to the accompanying, partially diagrammatic, drawings, in which:-
Figure 1 is a general elevation, not to scale, of one design of potato planter according to the present invention;
Figure 2 is a longitudinal section of one of the radial planter arms of the machine;
Figure 3 is an exploded view of the porting assembly used to activate the extension and retraction of the planter arms and the operation of the suction cups carried at their outer ends;
Figures 4(a) and 4(b), collectively referred to as Figure 4, are perspective views of the stator components used in the assembly of Figure 3;
Figure 5 is a perspective view of the rotor component used in the assembly of Figure 3;
Figures 6 and 7 show sectional and perspective views of the selection mechanism used in conjunction with the assembly of Figure 3 to determine which suction cups are "on" and which "off"; and
Figure 8 shows geometric developments of the elements of the selection mechanism taken at various settings of the mechanism.

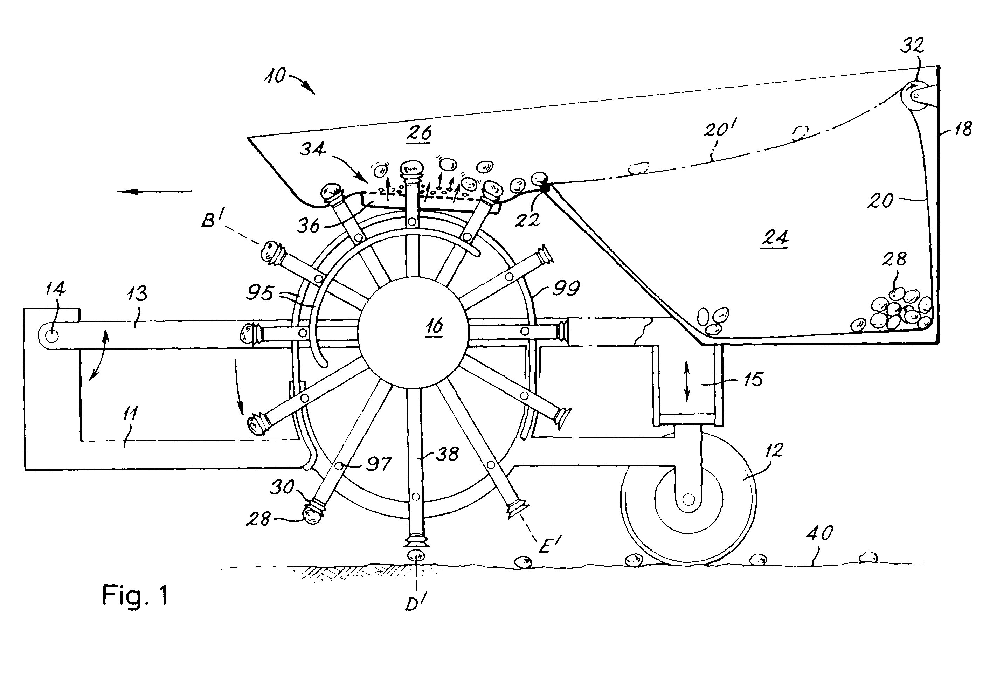

Thus referring first to Figure 1 of the drawings, a planter 10 according to one embodiment of the present invention comprises a trailed chassis 11 supported on ground wheels 12 and carrying a framework 13 whose attitude about a front pivotal connection 14 with the chassis is controlled by a ram 15 acting between the rear end of the framework 13 and the chassis 11.

A planting rotor 16 and is centrally mounted on the framework 13 which at its rear end carries an overhanging hopper 18 for the seed-pieces to be planted, in this case potatoes.

The hopper 18 includes a support web 20 anchored at its forward edge 22 to the junction point between the main storage rear section 24 of the hopper and a much shallower front section 26. In operation, the tubers (28) are removed by suction cups 30 of the rotor 16 as they pass through the slotted floor of the hopper as the rotor rotates (in an anticlockwise sense as viewed in Figure 1).

The rear edge of the support web 20 is attached to a roller-blind type winding roller 32 biased in a clockwise direction by a torsional spring (not shown).

Figure 1 shows the two extremes; the web when fully laden being depicted in full line (reference numeral 20), and the web in its fully wound position being depicted in broken line (20').

The foremost section 26 of the hopper is also apertured at 34 to allow a blanket of pressurised air to move upwardly from a plenum chamber 36. The air blanket serves to agitate and partially "float" the tubers so as to facilitate their pick-up by the suction cups 30.

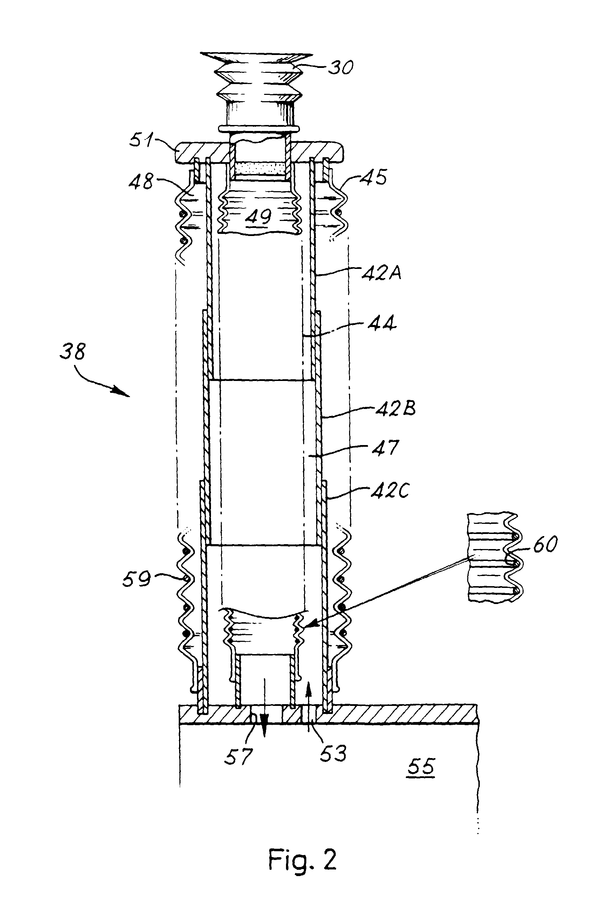

As illustrated, the cups 30 are carried by a succession of equally spaced radial arms 38, one of which is shown in more detail in Figure 2.

As will be clear from Figure 1, in operation of the planter, each arm is extended by a different amount depending upon its radial positions at the time.

Thus, the arms 38 at the top of their travel are deliberately withdrawn to the fullest extent possible so as to reduce their peripheral velocity and facilitate the successful pick-up of tubers from the hopper section 26, while the arms 38 at the lowest part of their travel have their extensions set to comply with the minimum ground speed requirement as already described.

If a change in arm length is required to accommodate a change in tuber spacing, this can be achieved by raising or lowering the chassis 11 to preserve the cup-to-ground spacing of the lowest cup at its optimum value (typically 5 cm or so above the ground 40).

Each arm of the star-wheel rotor 16 is as shown in more detail and to a larger scale in Figure 2 of the drawings from which it can be seen that it comprises a series of tube sleeves 42A, 42B, 42C mounted between internal and external bellows 44,45 to define two annular bellows chambers 47, 48 and a central chamber 49.

In the embodiment of Figures 1 and 2, arm extension and retraction is activated pneumatically by increasing or decreasing the inflation of the bellows 45 via an aperture 53 in the hub rotor assembly 55 on which the arms are mounted. A similar, but larger diameter, hub aperture 57 allows vacuum or pressure to be applied via chamber 49 to the suction cup 30.

The two bellows chambers 47,48 are sealed at their outer ends by an end plate 51 centrally apertured to house a rubberised cup which is optimised for vacuum pick-up. Conveniently, one or more of the tube sleeves 42 is apertured to improve the communication between chambers 47,48. The internal bellows terminates at the cup to allow air passage from the cup through the central chamber 49 of the arm assembly.

The arm assembly maintains its rigidity through the telescopic action of the tube sleeves 42. While the bellows pair 44,45 must be compliant to facilitate full extension and retraction of the arm assembly, their stiffness in directions perpendicular to this direction is preferably enhanced by a series of rings 59,60 fitted internally and externally of the two bellows as shown in Figure 2.

For the illustrated embodiment of the invention, the number of arms 38 was conveniently chosen as twelve, as this number divides to whole number fractions six and four, and with selectable switching of the arm extension and vacuum suction described below, this allows configurations of twelve, six and four suction cups to be active on the star pattern, as desired.

This feature of being able to select different active configurations increases the dynamic range of the mechanism. For example, the reduction from twelve active cups to six, means that for an identical set-up, a doubling of the seed-piece spacing can be achieved for the same forward speed of the machine. Similarly, a reduction to just four suction cups active will result in a tripling of the seed-piece spacing under the same operating conditions.

The dynamic range can be widened still further in modifications of the illustrated embodiment by redesigning the switching mechanism to allow for a reduction to three active suction cups. In fact, it is a general teaching of this aspect of the present invention that any whole number divisor of a fixed initial number of arms can be used to affect the dynamic range and it was solely as a matter of choice that in the illustrated embodiment, the three permissible settings of twelve, six and four active suction cups were considered sufficient.

The suction pick-up and hold means of the activated cups is implemented by a vacuum suction from a suitable vacuum pump (not shown) via hub aperture 57 as already described and, as has already been explained, the porting of the vacuum supply to each cup 30 is determined by the position and function of the cup during its period of rotation. There is also the positive pressure porting arrangement required if the extension/contraction means for the arms is to be effected by both positive and vacuum pressure.

Although either a mechanical or a pneumatic means is envisaged within the teachings of the present invention, a pneumatically operated extension/retraction system for the planting arms is the preferred means of actuation as it allows large extension ratios to be accommodated without the friction problems inherent in the alternative cam follower mechanism where large relative movement rates have to be undergone orthogonal to the direction of rotor rotation.

The cups must be under vacuum during the pick-up phase and through the seed-piece hold phase to the drop phase, where the vacuum is closed off and re-ported to "on" at the start of the seed-piece pick-up operation from the hopper.

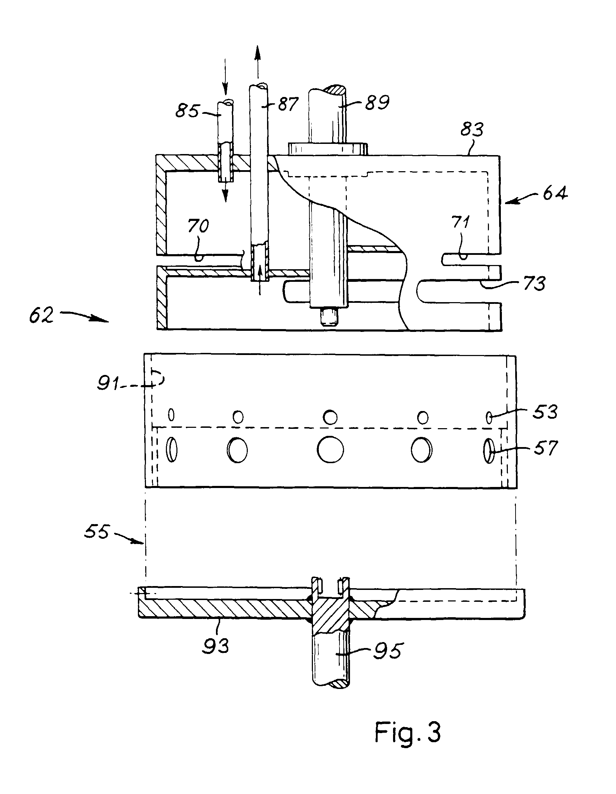

The porting arrangement for the supply of vacuum and pressure to the various parts of the machine as required, will now be described with reference to Figures 3 to 5.

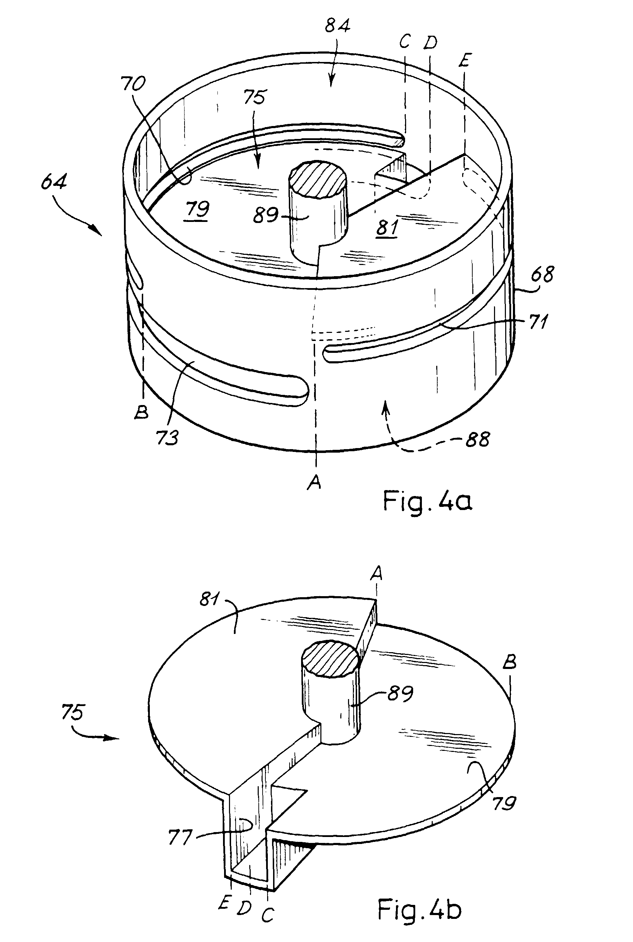

Thus referring next to Figures 3 and 4, the porting assembly 62 comprises a stator assembly 64 and the hub rotor assembly 55.

The stator assembly comprises an outer cylindrical housing 68 provided with circumferential slots 70,71 and 73.

As shown in Figure 4(a), the narrower slots 70,71 extend in the same plane as one another from location E to location A (slot 70) and from location B to location C (slot 71) while the broader slot 73 extends location A to location D in a different plane from slots 70.71 .

To the inner face of the housing 68 there is welded a partition member 75 shown separately in Figure 4(b), it being noted that Figures 4(a) and 4(b) view the partition member from opposite sides so that, for example, the "pit" section (77) which is on the far side of the assembly in Figure 4(a) is on the near side in Figure 4(b).

Thus referring now to Figure 4(b), it will be seen that the partition member 75 comprises what will be termed a "base plate" section 79 extending between locations A and C, a "step" section 81 extending between locations E and A, and a "pit" section (referred to above) let into the outer annular region of section 79 and extending between locations C and E.

Returning now to the exploded view of Figure 3, it will be seen that the "step-extending" end of the housing 68 is closed by an end plate 83(not shown in Figure 4a) with the volume 84 between partition member 75 and end plate 83 permanently joined with a pressure supply via pipe connection 85. In addition, a second pipe connection 87 extends through an aperture (not shown in Figure 4b) in the base plate section 79 of the partition member to connect the volume 88 between partition member 75 and the "pit-extending" end of the housing 68 to a vacuum supply.

Conveniently, the pipe connections 85,87 will be connected to the vacuum and discharge sides of a same vacuum pump (not shown) e.g. typically with a rating of 8 kW and 500 m³/hour, say. The positive pressure discharge side of the pump may also be used to supply the plenum chamber 36 mentioned earlier.

Reference numeral 89 indicates a central support rod for the stator assembly 64 and in practice, the assembly 64 will be mounted not as depicted in Figures 3 and 4 but with the support rod 89 lying horizontally along the rotation axis of the hub assembly and the pit section of the partition member lowermost.

As best seen from Figure 3, the hub assembly 55 comprises a ported wall portion 91 and an end plate 93 to which is welded the machine's drive axle 95. This latter is supported on a bearing surface provided by support rod 89 at its free end.

When the porting assembly is fully assembled, the ring of equally spaced smaller diameter ports 53 (see also Figure 3) in wall portion 91 will be at the level of the narrower slots 70, 71 in stator assembly 64, while the ring of equally spaced larger diameter ports 57 (see also Figure 2) each opposite one of the smaller ports 53, will be at the level of the wider slot 73 in assembly 64.

It will be appreciated that as the hub rotor assembly 55 rotates about the stator 64 during use of the machine, the apertures pairs 53,57 will be variously shut off from or connected with one or other of the porting volumes 84 (pressure), 88 (vacuum) depending on the angular position of the aperture pairs relative to the stator 64. The operational regime is perhaps best summed up in tabular form as below.

| **Path Section** | **Position of aperture 57 relative to partition member 75** | **Slot Present ?** | **Resulting supply to suction chamber 49** | **Position of aperture 53** | **Slot present ?** | **Resulting supply to bellows chambers 47,48** |
|---|---|---|---|---|---|---|
| A-B | On volume 88 side of base plate section 79 | Yes | Vacuum supply | On volume 84 side of base plate section 79 | No | None |
| B-C | On volume 88 side of base plate section 79 | Yes | Vacuum supply | On volume 84 side of base plate section 79 | Yes | Pressure supply |
| C-D | Traversing first half of pit section 77 | Yes | Pressure supply | Traversing first half of pit section 77 | No | None (shut - remains pressurised) |
| D-E | Traversing second half of pit section 77 | No | None (shut) | Traversing second half of pit section 77 | No | None (shut - remains pressurised) |
| E-A | On volume 88 side of step section 79 | No | None (shut) | On volume 88 side of step section 79 | Yes | Vacuum supply |

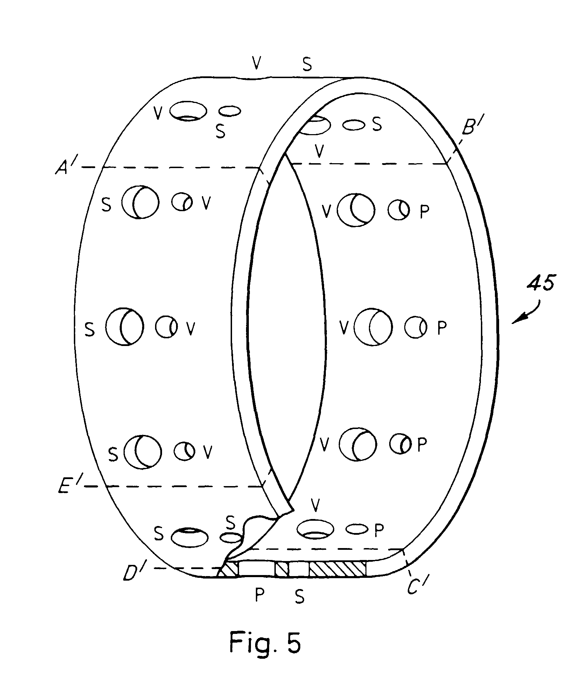

Figure 5 expresses this same information pictorially in the part-sectioned perspective view of the hub rotor assembly 55 where the various apertures have been variously labelled "S" (shut), "V" (vacuum), or "P" (pressure) to indicate the situation existing at each of the apertures at any given moment. The letters A' to E' in Figure 5 indicate the radial planes occupied by the corresponding stator locations of Figures 4a and 4b.

Thus referring still to Figure 5 but in conjunction with the general view of Figure 1. which shows (but not necessarily to scale) the extension and function of the various arms 38, it will be seen that from the start of pick-up (A') the extension/compression chamber of the arms will have been ported to vacuum, thus minimising the length of the arms and minimising the traverse velocity of the suction cups 30 through the bulk hopper 18. Once pick-up is achieved and the cup leaves the hopper (B'), this chamber is desirably ported to positive pressure, allowing the arm to extend between constraining guides 95 which are set for the desired arm extension (reference numeral 97 indicates a guide-engaging projection from the arms).

At the point of delivery (D'), the vacuum is ported out and the positive pressure ported in to the internal chamber of the relevant arm. This encourages the seed to leave the cup, and if an in-line filter (not shown) is fitted within this chamber, then this burst of positive pressure will exhaust trapped particles or debris built up on the filter. Immediately after delivery, the positive pressure is ported away from the relevant cup 30 and the vacuum is ported into the extension-contraction outer chamber (E'). The arm then contracts to another constraining radial guide 99 which conveniently sets the arm length to minimum and when the arm enters the hopper, the cycle as described above repeats.

The detailed arrangement of the valve hub assembly has already been described and, as also stated, both the positive pressure and suction requirements may be obtained by one and the same vacuum pump (with the discharge side of the pump supplying the positive pressure). To reduce vacuum pressure wastage if a seed potato is not picked up by a particular cup. from the hopper 18, the vacuum porting between the valve hub and the release points of the arms is preferably partially closed.

The sealing arrangement between the vacuum and pressure sides of the hub rotor assembly is conveniently implemented by an 0-ring seal (not shown) in a machined guide.

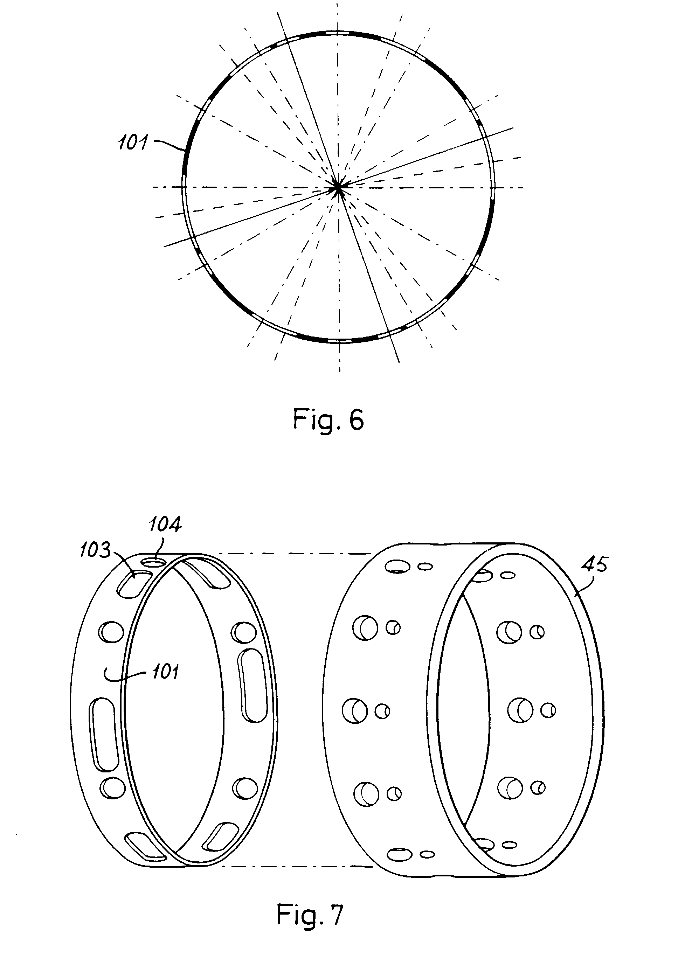

The means of switching between twelve, six and four "on" cups is achieved by an indexer ring-plate 101 (Figures 6 and 7), sandwiched between the outer rotor 45 and the inner stator 64.

Indexer ring-plate 101 is fixed in a working condition with respect to the rotor assembly, and only moves relative to the rotor if another number of arms is required to be active. Any suitable arrangement to move this plate may be employed. For example, a spiral-cam mechanism (not shown) may be incorporated which, when actuated by a fixed mechanism, pushes a thrust bearing against a collet which has a screw-type slot. This in turn will cause a rotation of an engaging spigot to effect a rotation of the interface plate 101 relative to the rotor. This engagement can therefore be made whilst the system is in operation.

As will be clear from Figure 7, the interface plate 101 has a series of slots (103) and holes (104) disposed about its periphery in such a manner that rotation of the plate 101 to one of three angular positions "1 ","2","3", ports in the vacuum chambers of the appropriate number of arms at the appropriate locations.

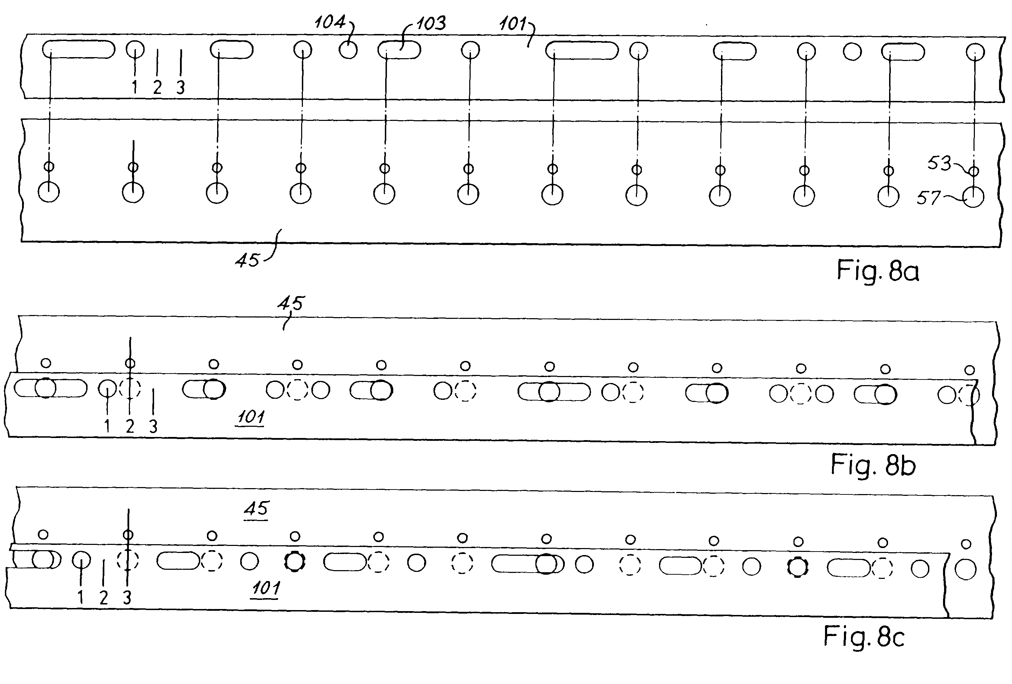

Figure 8(a) shows a geometric development of the plate 101 and rotor 45 in which (for clarity) the plate 101 and rotor 45 are depicted one above the other rather than side-by-side (see Figures 8b and 8c) as they would be in practice.

In the situation illustrated in Figure 8a, it will be observed that each suction aperture 57 is able to communicate with the suction volume 88 via an appropriate port in the plate 101 so that all the cups are "on": i.e. available for use as a suction cup during the appropriate part of their travel (A' to C'). By contrast, however, in the situations illustrated in Figures 8b and 8c, only every other cup (Figure 8b) or every third cup (Figure 8c) will be "on" in this sense.

Conveniently, the overall control of the planting operation is maintained by a variable speed drive motor for the star-wheel rotor, combined with a variable actuator operating on the external constraining guide for the arms. There will be desirably a ground speed measurement means to allow the setting of the motor and actuator to the appropriate positions for a given operator-input spacing requirement. An example of control settings now follows for given input parameters, viz. forward speed of two metres/second and desired spacing of 40 cms. The number of seeds deposited in one second would be five. The rotational velocity required to provide these five seeds would be, for a six arm star, five sixths or 0.8333 revolutions/second. This is 5.236 radians/second. Therefore the desired arm length which gives a peripheral velocity of two metres/second at that rotational speed would be 2/5.236 or 0.382 metres and the control settings would be fifty rpm for the wheel with arm length at discharge of 38.2 centimetres and only six of the twelve cups 'on'.

It is an advantage of at least the preferred embodiments of the invention that the pneumatic system employed provides the machine with a positive tuber capture method which to all extents and purposes both avoids 'doubles' *i.e.* picking up two tubers at a cup 30 instead of one, and minimises "misses' *i.e.* picking up none.

## Claims

1. A planter (10) comprising a number of seed-piece retention means (30) adapted for dropping seed pieces onto the ground or into a preformed furrow, and adapted to be driven around a common horizontal rotation axis with a common rotational speed and each displaceable towards and away from said axis to provide a corresponding variation in its peripheral velocity.

2. A planter (10) as claimed in Claim 1 in which the common rotational speed of the retention means (30) is in the same sense as any ground wheels (12) present.

3. A planter (10) as claimed in Claim 2 including speed adjustment means effective to set said common rotational speed to a value at which there will be zero or near zero relative speed between the retention means (30) and the ground (40) at the point (D') of seed-piece ejection from the planter (10).

4. A planter (10) as claimed in any preceding claim in which the planter (10) includes control means (95,97) operative to control the distance of the retention means (30) from the rotation axis in dependence on the angular position of the retention means (30) about said axis.

5. A planter (10) as claimed in Claim 4 in which the control means (95,97) is operative to ensure that said distance is at a minimum or other low value while the retention means is moving past a source (26) of the seed-pieces (28) to be planted, thereby to facilitate pick-up of the seed-pieces (28) from the source (26) by the retention means (30).

6. A planter (10) as claimed in any preceding claim in which the retention means (30) are mounted on the free-ends of variable-length arms (38).

7. A planter (10) as claimed in Claim 6 when including the limitations of at least Claim 4 in which the control means (95,97) comprises an arm-mounted spigot or like projection (97) which is engaged by a cam-rail or like guide element (95) to restrain motion of the projection (97) towards or away from the rotation axis as the case may be.

8. A planter (10) as claimed in any preceding claim in which the retention means (30) comprise suction cups or the like.

9. A planter (10) as claimed in any preceding claim in which pneumatic means (34,36) are provided to agitate and/or partially float seed-pieces (28) in a seed-piece container (26) so as to facilitate their pick-up by the retention means (30).

10. A planter (10) as claimed in any preceding claim in which changes in distance of the seed-retention means (30) from the rotation axis are effected by pneumatically-operated actuators (42,44,45).

11. A planter (10) as claimed in Claim 10 when including the limitations of at least Claim 6 and Claim 8 in which each arm (38) comprises a telescopic central section (42) mounted between internal and external bellows (44,45) to define inner and outer annular bellows chambers (47,48) and a central chamber (49), the central chamber (49) being pneumatically isolated from the other two chambers (47,48) so that the application of suction or pressure at the suction cups (30) is independent of the pneumatic extension and retraction of the arms (38).

12. A planter (10) as claimed in any preceding claim including switching means (62) to activate and/or de-activate selected ones of the retention means (30).

13. A planter (10) as claimed in Claim 12 when including the limitations of at least Claim 6 in which there are twelve arms (38) and the switching means (62) is operative so that all or only a specified evenly spaced fraction of this number of retention means (30) are activated.

14. A planter (10) as claimed in Claim 12 or Claim 13 when including the limitations of at least Claim 10 in which the switching means (62) is provided by a porting assembly comprising a stator assembly (64) and a rotor hub assembly (55).

15. A planter (10) as claimed in Claim 14 when including the limitations of at least Claim 6 in which the stator and rotor hub assemblies (64,55) comprise a circumferentially-apertured first cylindrical assembly (68), and a circumferentially-apertured second cylindrical assembly (55) at least in part embracing, or embraced by, the first cylindrical assembly (68), whereby, in operation of the planter (10), extension or retraction of the arms (38) is effected as the apertures of matching pairs of apertures of the two assemblies (71,73,53,57) are brought into or out of alignment with one another variously to connect with or shut out a vacuum source and/or a pressure source from the relevant retention means (30).

16. A planter (10) as claimed in Claim 15 in which the porting assembly (71,73,53,57) includes an apertured indexer assembly (101) adapted to set the number of vacuum cups (30) that will be operational in a given situation, the indexer assembly (101) being sandwiched between the stator assembly (64) and the rotor assembly (45) and being movable relative to both the assemblies into a chosen one of a number of pre-determined positions thereby to block off none or some of the matching aperture pairs (71,73,53,57) and prevent connection of the relevant retention means (30) with the vacuum/pressure source.

17. A planter (10) as claimed in any preceding claim including a variable speed drive motor and a ground speed measurement means operative automatically to reset the planter (10) to give the desired seed-piece spacing requirement substantially independently of the ground speed of the planter (10).

## Patentansprüche

1. Eine Pflanzmaschine (10), bestehend aus einer Vielzahl von Saatgut-Haltemitteln (30), die ausgeführt sind, um das Saatgut auf den Boden oder in vorgeformte Ackerfurchen fallen zu lassen und ausgeführt, um um eine gemeinsame horizontale Drehachse mit einer gemeinsamen Drehgeschwindigkeit gedreht zu werden, wobei jeweils jedes in Richtung der Achse und von ihr weg verschiebbar ist, um eine entsprechende Variation in ihrer Umfangsgeschwindigkeit bereitzustellen.

2. Pflanzmaschine (10) gemäß Anspruch 1, wobei die gemeinsame Drehgeschwindigkeit des Haltemittels (30) gleich derjenigen der vorliegenden Bodenräder (12) ist.

3. Pflanzmaschine (10) gemäß Anspruch 2, wobei diese ein Geschwindigkeitsteuermittel beinhaltet, das die gemeinsame Drehgeschwindigkeit bei einem Wert ansetzt, bei dem die relative Geschwindigkeit zwischen dem Haltemittel (30) und dem Boden (40) beim Punkt (D') des Saatgutauswurfs aus der Pflanzmaschine (10) Null oder fast Null beträgt.

4. Pflanzmaschine (10) gemäß einem der vorhergehenden Ansprüche, wobei die Pflanzmaschine (10) ein Steuermittel (95, 97) umfaßt, das dazu dient, den Abstand des Haltemittels (30) zur Drehachse hinsichtlich der Winkelposition des Haltemittels (30) um die Achse einzustellen.

5. Pflanzmaschine (10) gemäß Anspruch 4, wobei das Steuermittel (95, 97) betätigt wird, um sicherzustellen, daß dieser Abstand einen minimalen oder anderen tiefliegenden Wert beträgt, während das Haltemittel sich an einer Quelle (26) des zu pflanzenden Saatguts (28) vorbeibewegt, wodurch das Aufnehmen des Saatguts (28) von der Quelle (26) mittels des Haltemittels (30) erleichtert wird.

6. Pflanzmaschine (10) gemäß einem der vorhergehenden Ansprüche, wobei das Haltemittel (30) an den freien Enden von Armen mit einstellbarer Länge (38) befestigt ist.

7. Pflanzmaschine (10) gemäß Anspruch 6, wenn die Begrenzungen von zumindest Anspruch 4 eingeschlossen sind, wobei das Steuermittel (95, 97) einen am Arm befestigten Faßzapfen oder einen ähnlichen Vorsprung (97) umfaßt, der sich mittels einer Nockenschiene oder eines ähnlichen Führungselements (95) im Eingriff befindet, um die Bewegung des Vorsprungs (97) in Richtung der Drehachse bzw. von ihr weg einzuschränken.

8. Pflanzmaschine (10) gemäß einem der vorhergehenden Ansprüche, wobei das Haltemittel (30) Saugnäpfe oder dergleichen umfaßt.

9. Pflanzmaschine (10) gemäß einem der vorhergehenden Ansprüche, wobei Druckluftmittel (34, 36) bereitgestellt sind, um das Saatgut (28) in einem Saatgutbehälter (26) hin- und herzubewegen und/oder treiben zu lassen, um ihr Aufnehmen mittels des Haltemittels (30) zu erleichtern.

10. Pflanzmaschine (10) gemäß einem der vorhergehenden Ansprüche, wobei Unterschiede in den Abständen des Saatgut-Haltemittels (30) zur Drehachse durch druckluftbetätigte Betätigungselemente (42, 44, 45) hervorgerufen werden.

11. Pflanzmaschine (10) gemäß Anspruch 10, wenn die Begrenzungen von zumindest Anspruch 6 und Anspruch 8 eingeschlossen sind, wobei jeder Arm (38) einen ausziehbaren Mittelabschnitt (42) umfaßt, der zwischen einem inneren und einem äußeren Balg (44, 45) befestigt ist, um eine innere und eine äußere Balgkammer (47, 48) sowie eine zentrale Kammer (49) festzulegen, wobei die zentrale Kammer (49) von den anderen beiden Kammern (47, 48) pneumatisch isoliert wird, so daß das Ansaugen oder der Druck auf die Saugnäpfe (30) unabhängig vom pneumatischen Strecken und Einziehen der Arme (38) geschieht.

12. Pflanzmaschine (10) gemäß einem der vorhergehenden Ansprüche, die ein Schaltmittel (62) umfaßt, um ein ausgewähltes Haltemittel (30) zu aktivieren und/oder deaktivieren.

13. Pflanzmaschine (10) gemäß Anspruch 12, wenn die Begrenzungen von zumindest Anspruch 6 eingeschlossen sind, wobei zwölf Arme (38) vorhanden sind und das Schaltmittel (62) betätigt wird, so daß alle oder nur ein spezifischer, mit gleichmäßigen Abständen voneinander angeordneter Teil dieser Anzahl von Haltemitteln (30) aktiviert wird/werden.

14. Pflanzmaschine (10) gemäß Anspruch 12 oder Anspruch 13, wenn die Begrenzungen von zumindest Anspruch 10 eingeschlossen sind, wobei das Schaltmittel (62) durch eine Schlitzanordnung, die ein Leitsystem (64) und ein Rotornabensystem (55) umfaßt, bereitgestellt ist.

15. Pflanzmaschine (10) gemäß Anspruch 14, wenn die Begrenzungen von zumindest Anspruch 6 eingeschlossen sind, wobei das Leitsystem und das Rotornabensystem (64, 55) ein im Umfang mit Öffnungen versehenes, erstes zylindrisches System (68) und ein im Umfang mit Öffnungen versehenes, zweites zylindrisches System (55), welches das erste zylindrische System (68) zumindest teilweise umschließt oder von diesem umschlossen wird, umfassen, wodurch bei der Betätigung der Pflanzmaschine (10) das Strecken und Einziehen der Arme (38) bewirkt wird, wenn die Öffnungen mit entsprechenden Paaren von Öffnungen der beiden Systeme (71, 73, 53, 57) unterschiedlich miteinander ausgerichtet oder voneinander weggeführt werden, um sich mit einer Vakuumquelle und/oder einer Druckquelle vom relevanten Haltemittel (30) zu verbinden oder eine solche Verbindung auszuschließen.

16. Pflanzmaschine (10) gemäß Anspruch 15, wobei die Schlitzanordnung (71, 73, 53, 57) ein mit Öffnungen versehenes Zeigersystem (101) umfaßt, das ausgeführt ist, um die Anzahl von Saugnäpfen (30), die in einer bestimmten Situation betätigt werden, einzustellen, wobei das Zeigersystem (101) in einer Sandwichanordnung zwischen dem Leitsystem (64) und dem Rotorsystem (45) angeordnet ist und hinsichtlich beider Systeme in eine aus einer Anzahl vorbestimmter Positionen ausgewählte Position bewegbar ist, wodurch keine oder ein paar der entsprechenden Paare von Öffnungen (71, 73, 53, 57) blockiert werden und die Verbindung des relevanten Haltemittels (30) mit der Vakuum-/Druckquelle verhindert wird.

17. Pflanzmaschine (10) gemäß einem der vorhergehenden Ansprüche, die einen variierbaren Geschwindigkeitsantriebsmotor und ein Bodengeschwindigkeitsmeßmittel umfaßt, die automatisch betriebsbereit sind, um die Pflanzmaschine (10) einzustellen, damit die gewünschten Saatgutabstandsanforderungen im wesentlichen unabhängig von der Bodengeschwindigkeit der Pflanzmaschine (10) bereitgestellt werden.

## Revendications

1. Une planteuse (10) comprenant un certain nombre de moyens de retenue de semence (30) adaptés pour laisser tomber des semences sur le sol ou dans un sillon préformé, et adaptés pour être entraînés autour d'un axe de rotation horizontal commun à une vitesse de rotation commune et pouvant chacun être déplacé en direction dudit axe et à l'écart de celui-ci afin de fournir une variation correspondante de sa vélocité périphérique.

2. Une planteuse (10) telle que revendiquée dans la revendication 1 dans laquelle la vitesse de rotation commune des moyens de retenue (30) se fait dans le même sens que toute roue présente au sol (12).

3. Une planteuse (10) telle que revendiquée dans la revendication 2 comportant un moyen d'ajustement de la vitesse efficace pour régler ladite vitesse de rotation commune à une valeur à laquelle il sera obtenu une vitesse relative de zéro ou presque zéro entre les moyens de retenue (30) et le sol (40) au point (D') d'éjection de semence de la planteuse (10).

4. Une planteuse (10) telle que revendiquée dans n'importe quelle revendication précédente dans laquelle la planteuse (10) comporte un moyen de contrôle (95, 97) opérant pour contrôler la distance des moyens de retenue (30) à l'axe de rotation en fonction de la position angulaire des moyens de retenue (30) autour dudit axe.

5. Une planteuse (10) telle que revendiquée dans la revendication 4 dans laquelle le moyen de contrôle (95, 97) opère pour garantir que ladite distance est à une valeur minimale ou autre valeur basse lorsque le moyen de retenue passe devant une source (26) de semences (28) à planter, facilitant de ce fait le ramassage des semences (28) de la source (26) par les moyens de retenue (30).

6. Une planteuse (10) telle que revendiquée dans n'importe quelle revendication précédente dans laquelle les moyens de retenue (30) sont montés sur les extrémités libres des bras de longueur variable (38).

7. Une planteuse (10) telle que revendiquée dans la revendication 6 lorsqu'elle comporte les limitations de la revendication 4 au moins dans laquelle le moyen de contrôle (95, 97) comprend un ergot, ou une saillie similaire (97), monté sur un bras, avec lequel un rail à cames ou élément de guidage similaire (95) se met en prise afin de restreindre le mouvement de la saillie (97) en direction de l'axe de rotation ou à l'écart de celui-ci selon le cas.

8. Une planteuse (10) telle que revendiquée dans n'importe quelle revendication précédente dans laquelle les moyens de retenue (30) comprennent des ventouses ou analogue.

9. Une planteuse (10) telle que revendiquée dans n'importe quelle revendication précédente dans laquelle des moyens pneumatiques (34, 36) sont prévus pour agiter et/ou faire flotter partiellement des semences (28) dans un conteneur de semences (26) de façon à faciliter le ramassage de celles-ci par les moyens de retenue (30).

10. Une planteuse (10) telle que revendiquée dans n'importe quelle revendication précédente dans laquelle les changements de distance des moyens de retenue de semence (30) à l'axe de rotation sont effectués par des actionneurs à commande pneumatique (42, 44, 45).

11. Une planteuse (10) telle que revendiquée dans la revendication 10 lorsqu'elle comporte les limitations de la revendication 6 et de la revendication 8 au moins dans laquelle chaque bras (38) comprend une section centrale télescopique (42) montée entre des soufflets interne et externe (44, 45) pour définir des chambres à soufflets annulaires interne et externe (47, 48) et une chambre centrale (49), la chambre centrale (49) étant isolée de façon pneumatique des deux autres chambres (47, 48) de sorte que l'application de l'aspiration ou de la pression au niveau des ventouses (30) soit indépendante de l'extension et de la rétraction pneumatiques des bras (38).

12. Une planteuse (10) telle que revendiquée dans n'importe quelle revendication précédente comportant un moyen de commutation (62) pour activer et/ou désactiver des moyens sélectionnés parmi les moyens de retenue (30).

13. Une planteuse (10) telle que revendiquée dans la revendication 12 lorsqu'elle comporte les limitations de la revendication 6 au moins dans laquelle il existe douze bras (38) et le moyen de commutation (62) opère de manière que la totalité ou une fraction spécifiée seulement de ce nombre de moyens de retenue (30) espacés de façon uniforme soit activée.

14. Une planteuse (10) telle que revendiquée dans la revendication 12 ou la revendication 13 lorsqu'elle comporte les limitations de la revendication 10 au moins dans laquelle le moyen de commutation (62) est fourni par un assemblage de portage comprenant un assemblage de stator (64) et un assemblage de moyeu de rotor (55).

15. Une planteuse (10) telle que revendiquée dans la revendication 14 lorsqu'elle comporte les limitations de la revendication 6 au moins dans laquelle les assemblages de stator et de moyeu de rotor (64, 55) comprennent un premier assemblage cylindrique à ouvertures circonférentielles (68), et un second assemblage cylindrique à ouvertures circonférentielles (55) embrassant au moins en partie le premier assemblage cylindrique (68), ou étant embrassé par celui-ci, grâce à quoi, lorsque la planteuse (10) fonctionne, l'extension ou la rétraction des bras (38) s'effectue lorsque les ouvertures de paires d'ouvertures avec lesquelles s'accordent les deux assemblages (71, 73, 53, 57) sont amenées en alignement ou en non-alignement les unes sur les autres à différents moments pour raccorder les moyens de retenue (30) appropriés à une source à vide et/ou à une source de pression ou pour les couper de celles-ci.

16. Une planteuse (10) telle que revendiquée dans la revendication 15 dans laquelle l'assemblage de portage (71, 73, 53, 57) comporte un assemblage indexeur à ouvertures (101) adapté pour régler le nombre de ventouses (30) qui sera en opération dans une situation donnée, l'assemblage indexeur (101) étant pris en sandwich entre l'assemblage de stator (64) et l'assemblage de rotor (45) et pouvant se déplacer par rapport aux deux assemblages dans une position choisie parmi un certain nombre de positions prédéterminées, pour bloquer de ce fait aucune ou certaines paires d'entre les paires d'ouvertures avec lesquelles ils s'accordent (71, 73, 53, 57) et empêcher le raccordement des moyens de retenue appropriés (30) à la source à vide/de pression.

17. Une planteuse (10) telle que revendiquée dans n'importe quelle revendication précédente comportant un moteur d'entraînement à vitesse variable et un moyen de mesure de la vitesse au sol opérant de façon automatique pour remettre la planteuse (10) à l'état initial pour donner l'espacement nécessaire souhaité entre les semences de façon sensiblement indépendante de la vitesse au sol de la planteuse (10).
